# EUROPÄISCHE PATENTANMELDUNG

(11) **EP 1 376 912 A1**
(43) Veröffentlichungstag der Anmeldung: **02.01.2004**
(21) Anmeldenummer: 02360189.1
(22) Anmeldetag: 24.06.2002
(51) Int. Cl.: H04H 1/02, H04N 7/10

(54) **Verfahren zur Versorgung von Teilnehmern eines Datenverteilnetzes mit Multimedia-Datenströmen sowie Datenverteilnetz und Verteilpunkte hierfür**

(71) Anmelder: ALCATEL, 75008 Paris (FR)
(72) Erfinder: Weik, Hartmut, 70195 Stuttgart (DE); Jenisch, Markus, 71336 Waiblingen (DE)
(74) Vertreter: Brose, Gerhard

(57) **Zusammenfassung**

Die Erfindung betrifft ein Verfahren zur Versorgung von Teilnehmern eines Datenverteilnetzes (BCN) mit Multimedia-Datenströmen (MD), bei welchem eine erste Anzahl von Datenströmen verschiedener Programme in einen übergeordneten Verteilpunkt (DH1) eingespeist und von dort verschiedenen untergeordneten Verteilpunkten (B1, B2) zugeführt wird, wobei diese Datenströme jeweils für eine Übertragung mittels eines analogen Frequenzmultiplexverfahrens zu einer Anzahl von Hausanschlüssen (HA1, HA2, HA3, HA4, HA5) umwandelt werden, wobei die an die Hausanschlüsse angeschlossenen Endgeräte jeweils ein oder mehrere Programme mittels Selektion eines Frequenzkanals auswählen und an einen entsprechenden Benutzer ausgeben können und wobei die genannten untergeordneten Verteilpunke (B1, B2) zusätzlich zu der ersten Anzahl von Datenströmen jeweils eine zweite Anzahl mit einem oder mehreren Datenströmen empfangen und Datenströme der zweiten Anzahl von Datenströmen jeweils über bestimmte Frequenzkanäle zusammen mit Datenströmen der ersten Anzahl von Datenströmen an die jeweils angeschlossenen Hausanschlüsse (HA1, HA2, HA3, HA4, HA5) als analoge Signale übermittelt werden, sowie ein Datenverteilnetzes (BCN) und Verteilpunkte (B1, B2, VP) hierfür.

## Beschreibung

Die Erfindung betrifft ein Verfahren zur Versorgung von Teilnehmern eines Datenverteilnetzes mit Multimedia-Datenströmen nach dem Oberbegriff des Anspruchs 1, ein Datenverteilnetz nach dem Oberbegriff des Anspruchs 6, einen Verteilpunkt nach dem Oberbegriff des Anspruchs 7 und einen Verteilpunkt punkt nach dem Oberbegriff des Anspruchs 8 hierfür.

Zur Versorgung von Teilnehmern mit Fernseh- und Radioprogrammen wurden in der Vergangenheit in vielen Ländern ausgedehnte Verteilnetze aus Koaxialkabeln aufgebaut. Das beispielsweise in Deutschland unter dem Begriff BK 450 bekannte Breitbandkabelnetz weist ungefähr 450.000 km verlegte Koaxialkabel mit etwa 230.000 Breitbandverstärkern auf. Es stellt eine Bandbreite bis etwa 450 MHz zur Verfügung, innerhalb derer über 40 Fernsehprogramme mit jeweils einer Bandbreite von 7 MHz oder 8 MHz übertragen werden können.

Das Versorgungsnetz zur Versorgung von Teilnehmern mit Fernseh- und Hörfunkprogrammen ist administrativ in verschiedene Netzebenen aufgeteilt. Obere Netzebenen 1 und 2 dienen der Erstellung von Fernsehund Hörfunkprogrammen und deren Übertragung bis zu den sogenannten benutzerseitigen Breitbandkabel-Verstärkerstellen (bBKVrSt), welche von sogenannten übergeordneten Breitbandkabel-Verstärkerstellen über Koaxialkabel versorgt werden. Die Netzebene 3 beginnt an der benutzerseitigen Verstärkerstelle und endet an den Hausanschlusspunkten oder Hausübergabepunkten (HÜP). Die Netzebene 4, die sich bei größeren Anlagen überwiegend auf privatem Gelände befindet, beginnt an den sog. Hausübergabepunkten und erstreckt sich bis zu den Anschlüssen in den Wohnungen. Es kann sich dabei um ausgedehnte Netze mit einigen hundert Wohnungsanschlüssen handeln.

Die benutzerseitigen Verstärkerstellen bilden die Zentren der Anschlussbereiche, vergleichbar mit den Einrichtungen der Anschlussknoten des Fernsprechnetzes. Sie stellen die Grenze zwischen den Netzebenen 2 und 3 dar und versorgen die Anschlussbereiche mit den Netzebenen 3 und 4. Dafür hat eine solche Verstärkerstelle beispielsweise bis zu 8 Ausgänge, an die Koaxialkabel angeschlossen werden können, welche sich in eine verästelte Baumstruktur verschiedener Kabellinien verzweigen können und für eine flächendeckende Versorgung im Anschlussbereich sorgen. Dabei werden zwischengeschaltete Verstärkerpunkte als A-Verstärkerpunkte bezeichnet, wenn sie nur zur Verstärkung dienen, oder als B-Verstärkerpunkte bezeichnet, wenn zusätzlich noch eine Verzweigung zur Erzeugung der Baumstruktur durchgeführt wird. Die einzelnen Zweige des Baumes werden durch sogenannte C-Verstärker abgeschlossen.

Die bisherigen, auf konventioneller Koaxialtechnik basierenden Netze sind nur für eine Bandbreite von 450 MHz vorgesehen. Aufgrund zunehmender Anzahl von Anbietern von Fernsehinhalten besteht ein Bedarf an zusätzlichen Kanälen. Es ist daher geplant, den nutzbaren Frequenzbereich auszudehnen. So soll beispielsweise in Deutschland der nutzbare Frequenzbereich bis 862 MHz ausgedehnt werden, um damit 48 zusätzliche Kanäle mit jeweils einer Bandbreite von 8 MHz zu gewinnen. Die Übertragung des breiteren Frequenzbandes über die vorhandenen Koaxialkabel ist aber insbesondere wegen der bei den hohen Frequenzen stark ansteigenden, frequenzabhängigen Dämpfung nicht möglich. Daher sollen die Koaxialkabel durch Lichtwellenleiter ersetzt werden.

Der Ersatz der vergrabenen Kabel auf dem letzten kurzen Stück des Anschlusses, in diesem Fall von den C-Verstärkern bis zu den Hausanschlüssen, ist allerdings sehr aufwendig. Die Neuverlegung der Verbindungen nur bis zu den C-Verstärkern ist dagegen vergleichsweise einfach, besonders dann, wenn Kabelanlagen mit Rohren vorhanden sind. Aus diesem Grund wird eine gemischte Technik eingesetzt, die als Hybrid Fibre Coaxial Communication (HFCC) bezeichnet wird. Bei ihr werden nur die Kabel bis zu den C-Verstärkern durch Lichtwellenleiter ersetzt und im letzten Abschnitt die vorhandenen Koaxialkabel weiter benutzt. Dabei werden die C-Verstärker jeweils durch optische Netzabschlusspunkte, sogenannte Broadband Optical Network Terminations (BONTs) ersetzt.

Es besteht ein zunehmender Bedarf, Benutzer des beschriebenen analogen Breitbandkabelnetzes neben überregionalen Programmen auch mit regionalen oder lokalen Programmen oder Diensten zu versorgen, d.h. diese Benutzer gezielt mit lokalen Programmen, beispielsweise Stadtteilprogrammen versorgen zu können. Ein mittels der oben genannten Hybrid Fibre Coaxial Communication Technik aufgerüstetes Breitbandkabelnetz genügt, ebenso wie das heutige Breitbandkabelnetz, aufgrund der begrenzten (analogen) Kanäle zwischen den oben genannten optischen Netzabschlusseinheiten und den Benutzern häufig nicht für eine feingranulierte lokal differenzierte Versorgung seiner Benutzer.

Eine Möglichkeit zur Überwindung der genannten Engpässe stellt eine direkte Versorgung der Benutzer mit digitalen Signalen über die bestehenden Koaxialverbindungen dar, welche gegenüber analogen Signalen deutlich weniger Bandbreite benötigen. Für die notwendige Umwandlung in analoge Signale wird dann allerdings eine zusätzliche Einrichtung, z.B. eine sogenannte Set Top Box auf Benutzerseite erforderlich.

Der Erfindung liegt die Aufgabe zugrunde, ein Verfahren und geeignete Mittel zu schaffen, welche es ermöglichen, die Teilnehmer eines Breitbandkabelnetzes mit analogen Hausanschlüssen sowohl mit überregionalen Programme als auch ortsselektiv mit lokalen Programme zu versorgen, ohne dass zusätzliche Einrichtungen auf Benutzerseite erforderlich sind.

Erfindungsgemäß wird diese Aufgabe durch ein Verfahren nach der Lehre des Anspruchs 1, ein Datenverteilnetz nach der Lehre des Anspruchs 6 und einen Verteilpunktpunkt nach der Lehre des Anspruchs 7 gelöst und einen weiteren Verteilpunktpunkt nach der Lehre des Anspruchs 8 gelöst.

Grundgedanke der Erfindung ist es, eine erste Anzahl von Datenströmen, beispielsweise nationale Programme, in übergeordnete Verteilpunkte einzuspeisen und zusätzlich eine zweite Anzahl von Datenströmen, beispielsweise lokale Programme, in untergeordnete Verteilpunkte eines hybriden Glasfaser/Koaxial Breitband-Zugangsnetzes einzuspeisen. Die untergeordneten Verteilpunkte wandeln diese Datenströme dergestalt, dass diese Daten mittels des in konventionellen Breitbandkabelnetzen üblichen analogen Frequenzmultiplexverfahrens zu jeweils angeschlossenen Hausanschlusspunkten übertragen werden können, wobei die an die Hausanschlusspunkte angeschlossenen Endgeräte jeweils, wie bekannt, ein oder mehrere Programme mittels Selektion eines Frequenzkanals auswählen und an einen entsprechenden Benutzer ausgeben können. Die genannten untergeordneten Verteilpunke selektieren, beispielsweise nach lokalen Kriterien, aus der zweiten Anzahl der Datenströme jeweils bestimmte Datenströme aus und senden diese Datenströme jeweils über bestimmte Frequenzkanäle zusammen mit Datenströmen der ersten Anzahl an die jeweils angeschlossenen Hausanschlüsse.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnungen weiter erläutert:
- Fig.1: zeigt schematisch einen beispielhaften Ausschnitt eines hybriden Glasfaser/Koaxial Breitband-Zugangsnetzes gemäß dem Stand der Technik,
- Fig.2a: zeigt schematisch einen erfindungsgemäßen Verteilpunkt zur Durchführung einer ersten Variante eines erfindungsgemäßen Verfahrens,
- Fig.2b: zeigt schematisch einen erfindungsgemäßen Verteilpunkt zur Durchführung einer zweiten Variante eines erfindungsgemäßen Verfahrens und
- Fig.3: zeigt beispielhaft eine Frequenzplan im Breitband-Zugangsnetz gemäß eines erfindungsgemäßen Verfahrens.

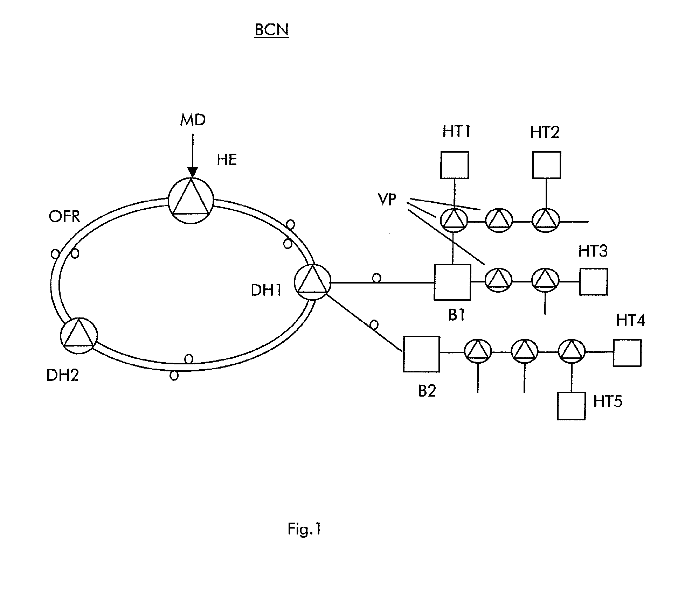

Fig.1 zeigt schematisch einen beispielhaften Ausschnitt eines hybriden Glasfaser/Koaxial Breitband-Zugangsnetzes BCN der oben genannten Netzebenen 2 und 3 gemäß dem Stand der Technik. Fig.1 zeigt einen zur Netzebene 2 gehörenden redundanten optischen Faserring OFR (engl.: Optical Fibre Ring), welcher einen übergeordneten Einspeisepunkt HE (engl.: Head End) und beispielhaft einen ersten (benutzerseitigen) Verteilpunkt DH1 (engl.: Distribution Hub) und einen zweiten (benutzerseitigen) Verteilpunkt DH2 optisch miteinander verbindet. In den übergeordneten Einspeisepunkt HE werden Multimedia-Datenströme MD eingespeist. An den zweiten Verteilpunkt DH2, welcher die Grenze zur Netzebene 3 darstellt, sind beispielhaft über jeweils einen Punkt-zu-Punkt-Lichtwellenleiter ein erster optischer Abschlusspunkt B1, auch BONT genannt (englisch: Broadband Optical Network Termination), und ein zweiter optischer Abschlusspunkt B2 angeschlossen. An den ersten optischen Abschlusspunkt B1 sind beispielhaft über verschiedene Koaxialkabel und analoge Verstärkerpunkte (VP) ein erster, zweiter und dritter Hausanschlusspunkt HT1, HT2 und HT3 (engl.: Home Termination) und an den zweiten optischen Abschlusspunkt B2 sind beispielhaft über weitere Koaxialkabel und Zwischenverstärker ein vierter und fünfter Hausanschlusspunkt HT4 und HT5 angeschlossen.

In den übergeordneten Einspeisepunkt HE werden die übergeordneten Multimedia-Datenströme MD eingespeist. Dabei kann es sich beispielsweise um analoge elektrische Fernsehsignale handeln, welche im übergeordneten Einspeisepunkt HE in digitale optische Signale umgewandelt werden. Dazu werden optische Laserverstärker eingesetzt, deren emittierte Lichtstärke durch einen Modulator linear abhängig vom Pegel des Sendesignals verändert wird (Intensitäts-Modulation). Es kann dazu Licht mit der Wellenlänge 1300 nm oder 1550 nm verwendet werden.

Weil sich ein Systemausfall aufgrund der hohen Teilnehmeranzahl unangenehm bemerkbar macht, wird das optische Übertragungsnetz der Netzebene 2 redundant ausgelegt. Dabei ist es oftmals günstiger, an Stelle vieler gedoppelter Punkt-zu-Punkt Verbindungen, wie in Fig.1 gezeigt, einen bidirektionalen Ring OFR aus zwei Lichtwellenleitern zu bilden, in den die Verteilpunkte DH1 und DH2 über optische Splitter eingeschleift werden. Bei dieser in der optischen Übertragungstechnik bekannten Konfiguration ist es möglich, auch bei der Unterbrechung einer Faser entsprechende Ersatzschaltungen über die verbleibende Faser mittels optischer Schalter im übergeordneten Einspeisepunkt HE durchzuführen.

In den Verteilpunkten DH1 und DH2 werden die über den Lichtwellenleitering OFR empfangenen Signale optisch verstärkt und über jeweils einen Lichtwellenleiter zu den optischen Netzabschlusspunkten B1 und B2 geführt. Diese optischen Netzabschlusspunkte B1 und B2 können ohne Zwischenverstärkung über Entfernungen bis zu einigen Kilometern Abstand (z.B. 6 km) versorgt werden. In diese optischen Netzabschlusspunkte werden die empfangenen digitalen optischen Signale in analoge elektrische Signale umgewandelt und verstärkt und als elektrische Signale über Koaxialkabel, und je nach Länge und Verzweigungsstruktur über eine Anzahl von eingangs genannten analogen (A-,B- oder C-) Verstärkerpunkten VP, zu den entsprechenden einzelnen Hausanschlusspunkten HT1- HT5 geführt.

Durch die Aufrüstung der analogen Breitbandkabelnetze zu hybriden BCN mit optischer Übertragungstechnik ist es möglich, die optischen Abschlusspunkte B1 und B2 mit einer großen Anzahl von (digitalen) Programmen zu versorgen, welche um ein vielfaches höher ist als die Anzahl der (analogen) Programme, mit welchen die benutzerseitigen Verstärkerstellen im konventionellen analogen Breitbandkabelnetz versorgt werden können. Da jedoch die Übertragung auch im hybriden Glasfaser/Koaxial Kabelnetz BCN die Übertragung von den optischen Netzabschlusspunkten B1 und B2 bis zu den Endgeräten der Endbenutzer unverändert analog erfolgt, kann nur ein Bruchteil dieser Programme an diese Endbenutzer weitervermittelt werden. Es ist dabei insbesondere nicht möglich, Programme von nur kleinörtlich begrenztem Interesse, d.h. verschiedene Programme für jeweils einen Teilanschlussbereich einer Vielzahl von Teilanschlussbereichen eines von einem Verteilpunkt versorgten Anschlussbereiches einzuspeisen.

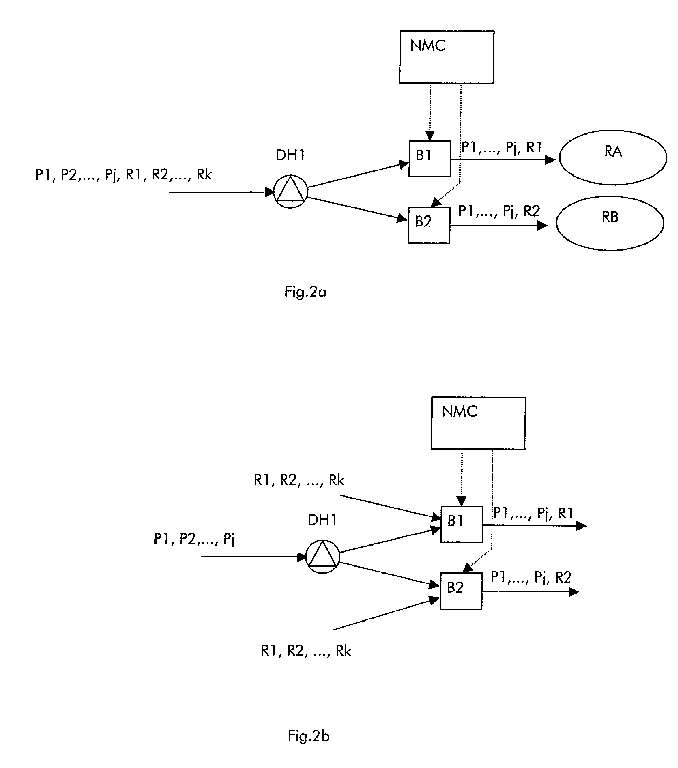

Erfindungsgemäß sollen die Endbenutzer eines hybriden Glasfaser/Koaxial Kabelnetzes BCN je nach Teilanschlussgebiet mit mindestens einem Programm von kleinörtlichen Interesse, im folgenden "lokales Programm" genannt, versorgt werden, ohne auf die Versorgung mit der heutigen Vielzahl von überregionalen oder nationalen Programmen zu verzichten. Dazu zeigen Fig.2a und Fig.2b beispielhaft jeweils ein erfindungsgemäßes Ausführungsbeispiel.

Fig.2a zeigt beispielhaft den aus Fig.1 bekannten ersten Verteilpunkt DH1 und die ebenfalls aus Fig.1 bekannten optischen Netzabschlusspunkte B1 und B2. Der erste Verteilpunkt DH1 wird dabei mit nationalen Programmen P1, P2, ..., Pj und lokalen Programmen R1, R2,..., Pk versorgt. Diese Programme werden jeweils an den ersten optischen Netzabschluss B1 und an den zweiten optischen Netzabschlusspunkt B2 weitergeleitet. Der erste optische Netzabschlusspunkt B1 empfängt alle nationalen und lokalen Programme und übermittelt alle nationalen Programme P1- Pj und beispielhaft das erste lokale Programm R1 zu hier nicht gezeigten Hausanschlusspunkten eines ersten lokalen Gebiets RA. Der zweite optische Netzabschlusspunkt B2 leitet alle nationalen Programme P1- Pj und beispielhaft das zweite lokale Programm R2 zu hier nicht gezeigten Hausanschlusspunkten eines zweiten lokalen Gebiets RB. Eine Netzüberwachungseinrichtung NMC überwacht oder kommandiert, hier durch gestrichelte Pfeile angedeutet, die Funktionen der optischen Netzabschlusspunkte B1 und B2.

Die Netzüberwachungseinrichtung NMC weist die optischen Netzabschlusspunkte B1 und B2 jeweils an, ein oder mehrere bestimmte (lokale) Programme aus den empfangenen digitalen (lokalen) Programmen auszuwählen und nach optisch/elektrischer Wandlung auf einen beziehungsweise mehrere bestimmte Programmplätze zu legen. Alternativ dazu kann diese Anweisung oder Teile dieser Anweisung, beispielsweise die zu belegenden Programmplätze, auch fest in den Netzabschlusspunkte B1 und B2 programmiert sein.

Während die nationalen Programme in der Regel in den übergeordneten Verteilpunkt HE eingespeist werden, kann die Einspeisung der lokalen Programme direkt in den ersten Verteilpunkt DH1 erfolgen. Wenn diese Einspeisung analog erfolgt, so werden die entsprechenden analogen Daten in digitale optische Daten gewandelt und entsprechend der digitalen optischen Daten der nationalen Programme an die optischen Netzabschlusspunkte B1 und B2 gesendet. Hier findet nun einerseits jeweils eine Umwandlung der optischen Daten in elektrische (analoge) Daten statt und andererseits werden jeweils aus den empfangenen Programmen P1- Pⱼ, R12- Rk Programme zur Weiterführung an die Endbenutzer ausgewählt. In dem hier gezeigten Beispiel wird jeweils ein lokales Programm R1 bzw. R2 ausgewählt. Diese ausgewählten lokalen Programme werden dann auf festgelegte Programmkanäle gelegt, d.h. sie werden auf bestimmte Trägerfrequenzen aufmoduliert. Je nach lokalem Gebiet RA oder RB empfängt ein Endbenutzer aus einem festgelegten Programmplatz damit ein unterschiedliches lokales Programm.

Alternativ dazu zeigt Fig.2b ein Beispiel mit einer Einspeisung der lokalen Programme P1- Pk jeweils in die optischen Netzabschlusspunkte B1 und B2. anstelle der Einspeisung in den ersten Verteilpunkt gemäß der Fig.2a.

Es sind selbstverständlich auch Mischformen aus den gezeigten Alternativen möglich, bei denen also ein Teil der Programme in Netzelemente der Netzebene 2 und ein Teil der Programme in Netzelemente der Netzebene 3 eingespeist werden. Dabei müssen die auszuwählenden Programme nicht unbedingt nach lokalen Interessen ausgewählt werden. Es ist ebenso möglich, dass die Endbenutzer verschiedener Regionen auch mit jeweils verschiedenen nationalen Programmen versorgt werden.

Bisher wurde davon ausgegangen, dass die lokalen Programme in die Verteilpunkte DH1 und DH2 der Netzebene 2 oder in die optischen Netzabschlusspunkte B1 und B2 eingespeist werden.

Es ist auch möglich, lokale Programme erst hinter den optischen Abschlusspunkten B1 und B2 in Verstärkerpunkte VP einzuspeisen. Dadurch wird eine noch feinere Granulierung einer lokalen Programmversorgung möglich (z.B. Strassenfernsehen oder Wohnblockfernsehen, bei welchem ein Programm mit Bilddaten eines entsprechenden Kinderspielplatzes angeboten wird). Dabei kann ein von einem solchen Verstärkerpunkt VP zu belegender Programmplatz entweder freigehalten von den entsprechenden optischen Abschlusspunkten freigehalten werden oder dieser Verstärkerpunkt filtert ein bestimmtes Programm aus dem gesamten Frequenzbereich aus und belegt es mit einem bestimmten lokalen Programm.

Es ist insbesondere möglich, dass ein Verstärkerpunkt VP beispielsweise einen Empfangsbereich bis zu 862 MHz aufweist und einen digitalen Kanal aus dem Bereich oberhalb von 450 MHz in einen analogen Kanal im Bereich unterhalb450 MHz umsetzt. Dieses Verfahren kann insbesondere für eine punktuelle Aufrüstung in bestehenden Netzen vorgesehen werden.

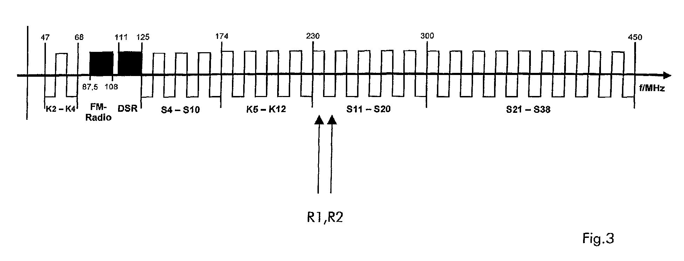

Im Breitbandkabelnetz BK 450 steht eine Bandbreite bis 446 MHz zur Verfügung, deren Aufteilung in verschiedene Frequenzkanäle in Fig.3 gezeigt wird. Im niedrigsten Bereich unterhalb 9 MHz liegt ein hier nicht gezeigter Überwachungs- und Dienstkanal D. Darüber sind zwischen 14,75 MHz und 28,75 MHz zwei 7 MHz breite Kanäle in Rückwärtsrichtung eingeplant, die aber in bestehenden Netzen oft nicht eingerichtet und hier nicht dargestellt sind. Das Verteilprogramm beginnt bei 47 MHz mit den drei Kanälen K2 bis K4. Ihr Bereich von 47 MHz bis 68 MHz wird bei der Aufrüstung des BK-Netzes mit einem Rückkanal mit ausreichender Übertragungskapazität für interaktive Dienste benötigt, die jedoch noch häufig für regionale Sonderprogramme benutzt werden. Bei 80,5 MHz ist eine hier nicht dargestellte Pilotfrequenz eingefügt, die zur Nachstellung der pilotgeregelten Verstärker notwendig ist. Darüber liegen von 87,5 MHz bis 108 MHz die UKW-Radiokanäle und von 111 MHz bis 125 MHz die Kanäle für Digitales Satelliten Radio (DSR). Zwischen 125 MHz und 300 MHz sind 25 Kanäle mit 7 MHz Bandbreite und von 302 MHz bis 446 MHz weitere 18 Kanäle mit 8 MHz Bandbreite für die Fernsehverteilung verfügbar. In einem bis 900 MHz aufgerüsteten Breitbandkabelnetz stehen darüber hinaus eine Vielzahl weiterer, hier nicht gezeigter Kanäle zur Verfügung. Beispielhaft sind die zwei Kanäle S11 und S12 als Kanäle für lokale Programme R1 und R2 eingezeichnet.

Wie eingangs beschrieben, ist es für viele Netze geplant, den nutzbaren Frequenzbereich im Anschlussbereich durch Aufrüstung der entsprechenden Verstärkerpunkte VP bis beispielsweise 862 MHz auszudehnen. Damit können dann 48 zusätzliche Kanäle mit jeweils einer Bandbreite von 8 MHz eingerichtet werden. Alternativ oder zusätzlich zu Kanälen des Bereichs unterhalb 450 MHz können dann Kanäle des Bereichs oberhalb 450 MHz zur Einspeisung lokaler Programme vorgesehen werden.

## Patentansprüche

1. Verfahren zur Versorgung von Teilnehmern eines Datenverteilnetzes (BCN) mit Multimedia-Datenströmen, bei welchem eine erste Anzahl von Datenströmen (P1, P2, ..., Pj) verschiedener Programme über einen übergeordneten Verteilpunkt (DH1) zu verschiedenen untergeordneten Verteilpunkten (B1, B2) zugeführt wird, welche diese Datenströme jeweils für eine Übertragung mittels eines analogen Frequenzmultiplexverfahrens zu einer Anzahl von Hausanschlüssen (HA1, HA2, HA3, HA4, HA5) umwandeln, und wobei die an die Hausanschlüsse angeschlossenen Endgeräte jeweils ein oder mehrere Programme mittels Selektion eines Frequenzkanals auswählen und an einen entsprechenden Benutzer ausgeben können, **dadurch gekennzeichnet, dass** die genannten untergeordneten Verteilpunke (B1, B2) zusätzlich zu der ersten Anzahl von Datenströmen jeweils eine zweite Anzahl von Datenströmen (R1, R2, Rk) empfangen, aus welchen in den untergeordneten Verteilpunkten (B1, B2) jeweils ein oder mehrere Datenströme (R1, R2) selektiert, und diese Datenströme jeweils über bestimmte Frequenzkanäle zusammen mit Datenströmen der ersten Anzahl von Datenströmen (P1, P2, ..., Pj) an die jeweils angeschlossenen Hausanschlüsse (HA1, HA2, HA3, HA4, HA5) als analoge Signale übermittelt werden.

2. Verfahren nach Anspruch 1, **dadurch gekennzeichnet, dass** die erste Anzahl und die zweite Anzahl von Datenströmen (P1, P2, ..., Pj, R1, R2, Rk) über optische Lichtwellenleiter von den untergeordneten Verteilpunkten (B1, B2) in Form von optischen digitalen Signalen empfangen werden und durch die jeweils durchgeführte Umwandlung in den untergeordneten Verteilpunkten (B1, B2) in elektrischen analoge Signale umgewandelt werden.

3. Verfahren nach Anspruch 1, **dadurch gekennzeichnet, dass** die zweiten Datenströme (R1, R2, Rk) in den übergeordneten Verteilpunkt (DH1) über eine separate Schnittstelle eingespeist werden.

4. Verfahren nach Anspruch 1, **dadurch gekennzeichnet, dass** die zweiten Datenströme (R1, R2, Rk) jeweils in untergeordnete Verteilpunkte (B1, B2) über separate Schnittstellen eingespeist werden.

5. Verfahren nach Anspruch 1, **dadurch gekennzeichnet, dass** die untergeordneten Verteilpunkte (B1, B2) von einer Netzüberwachungseinrichtung (NMC) jeweils eine Aufforderung enthalten, jeweils einen bestimmten Datenstrom der zweiten Datenströme (R1, R2, Rk) auszuwählen und auf einen bestimmten Frequenz- oder Programmplatz für die Übertragung zu den jeweils angeschlossenen Hausanschlüssen (HA1, HA2, HA3, HA4, HA5) zu legen.

6. Datenverteilnetz (BCN) zum Verteilen von Multimedia-Datenströmen (MD), mit einem übergeordneten Verteilpunkt (DH1) zur Einspeisung einer ersten Anzahl von Datenströmen (P1, P2, ..., Pj) und untergeordneten Verteilpunkten (B1, B2) zum Empfang dieser Datenströme mit Umwandlungsmitteln zur Umwandlung der Datenströme für eine Übertragung mittels eines analogen Frequenzmultiplexverfahrens, und mit Hausanschlüssen (HA1, HA2, HA3, HA4, HA5) mit Empfangsmitteln zum Empfang der umgewandelten analogen Datenströme, **dadurch gekennzeichnet, dass** die untergeordneten Verteilpunkte (B1, B2) jeweils Empfangsmittel zum Empfang einer zweiten Anzahl von Datenströmen (R1, R2, Rk) aufweisen, Selektionsmittel zum Auswählen eines oder mehrerer Datenströme (R1, R2) und Sendemittel zum Senden der ausgewählten Datenströme (R1, R2) jeweils über bestimmte Frequenzkanäle zusammen mit Datenströmen der ersten Anzahl von Datenströmen (P1, P2, ..., Pⱼ) an jeweils an die untergeordneten Verteilpunkte (B1, B2) angeschlossenen Hausanschlüsse (HA1, HA2, HA3, HA4, HA5).

7. Verteilpunkt (B1, B2) zum Verteilen von Multimedia-Datenströmen, mit Empfangsmitteln zum Empfang einer ersten Anzahl von digitalen Datenströmen (P1, P2, ..., Pj), Umwandlungsmitteln zum Umwandeln der digitalen in analoge Signale und Sendemitteln zum Senden der analogen Signale über eine elektrische Schnittstelle **dadurch gekennzeichnet, dass** der Einspeisepunkt Empfangsmittel zum Empfang einer zweiten Anzahl von Datenströmen (R1, R2, Rk), Selektionsmittel zum Auswählen eines oder mehrerer Datenströme (R1, R2) und Sendemittel zum Senden der ausgewählten Datenströme (R1, R2) über bestimmte Frequenzkanäle zusammen mit Datenströmen der ersten Anzahl von Datenströmen (P1, P2, ..., Pj) über die elektrische Schnittstelle aufweist.

8. Verteilpunkt (VP) zum Verteilen von Multimedia-Datenströmen, mit Empfangs- und Sendemitteln mitteln zum Vermitteln einer ersten Anzahl von analogen Datenströmen (P1, P2, ..., Pj) über eine elektrische Schnittstelle, **dadurch gekennzeichnet, dass** der Verteilpunktpunkt Empfangsmittel zum Empfang einer zweiten Anzahl von digitalen Datenströmen (R1, R2, Rk), Umwandlungsmittel zum Umwandeln dieser Datenströme in analoge elektrische Signale und Sendemittel zum Senden von Datenströmen (R1, R2) der zweiten Anzahl von Datenströmen über bestimmte Frequenzkanäle zusammen mit Datenströmen der ersten Anzahl von Datenströmen (P1, P2, ..., Pⱼ) über die elektrische Schnittstelle aufweist.
